# EUROPEAN PATENT APPLICATION

(11) **EP 2 065 875 A1**
(43) Date of publication of application: **03.06.2009**
(21) Application number: 08170045.2
(22) Date of filing: 27.11.2008
(51) Int. Cl.: G09G 3/22, G09G 3/34

(54) **Light emitting device, driving method for the light emitting device, and display device using the light emitting device**

(30) Priority: 27.11.2007 KR 20070121526
(71) Applicant: Samsung SDI Co., Ltd., Suwon-si Gyeonggi-do (KR)
(72) Inventor: Lee, Ji-Won Legal & IP Team, Samsung SDI Co., LTD.,, Suwon-si, Gyeonggi-do (KR)
(74) Representative: Hengelhaupt, Jürgen

(57) **Abstract**

A light emitting device, a driving method thereof, and a display device are provided. The light emitting device includes: a controller for generating a light emission signal according to an input video signal; a column driver for generating a light emission data signal corresponding to the light emission signal; and a plurality of scan lines for transmitting a plurality of scan signals, a plurality of column lines for transmitting a plurality of light emission data signals, and a plurality of light emission pixels at crossing regions of the plurality of scan lines and the plurality of column lines. The controller is configured to sum gray levels corresponding to the input video signal of a single frame, to calculate a load ratio corresponding to the sum, to calculate a conversion ratio corresponding to the load ratio, and to increase the light emission data signal according to the conversion ratio.

## Description

### BACKGROUND OF THE INVENTION

### 1. Field of the Invention

The present invention relates to a display device and, more particularly, to a display device including a light emitting device operating in synchronization with the display device.

### 2. Description of the Related Art

A liquid crystal display (LCD), a type of flat panel display, is a display device that displays an image by changing light transmittance of pixels by using dielectric anisotropy of liquid crystal whose helix angle changes according to an applied voltage. Compared with cathode ray tubes and similar image display devices, an LCD is advantageous in that it is light and thin and consumes less power.

An LCD basically includes a liquid crystal panel assembly and a light emitting device positioned at a rear side of the liquid crystal panel assembly and providing light to the liquid crystal panel assembly.

If the liquid crystal panel assembly is an active liquid crystal panel assembly, the active liquid crystal panel assembly typically includes a pair of transparent substrates, a liquid crystal layer positioned between the transparent substrates, polarizers on outer surfaces of the transparent substrates, a common electrode provided on an inner surface of one of the transparent substrates, pixel electrodes and switching elements provided on an inner surface of another of the transparent substrates, color filters giving red, green, and blue colors to three subpixels constituting a single pixel, and associated components.

The liquid crystal panel assembly receives light emitted from the light emitting device and allows the light to be transmitted or blocked by means of the liquid crystal layer to display an image.

The light emitting device may be one of many types of light sources. A cold cathode fluorescent lamp (CCFL) is one of the light emitting devices. Because the CCFL is a linear light source, light generated from the CCFL can be evenly distributed to the liquid crystal panel assembly via optical members such as a diffusion sheet, a diffuser, and/or a prism sheet.

However, because light generated from the CCFL passes through the optical members, a considerable amount of light loss occurs. It is known that in the CCFL type LCD, only 3% to 5% of light generated from the CCFL is transmitted through the liquid crystal panel assembly. In addition, the CCFL type light emitting device consumes much power, taking up a large portion of the overall power consumption of the LCD. In addition, because it is difficult to increase the area of the CCFL due to its structure, it is very difficult to apply a CCFL type light emitting device to a large-size LCD of 30 inches or larger.

A light emitting diode (LED) is another conventional light emitting device. The LED is a point (or dot) light source, and a plurality of LEDs are typically provided together with a reflection sheet, a light guide plate, and the optical members such as the diffusion sheet, the diffuser, and/or the prism sheet, to constitute the light emitting device. The LED type light emitting device is advantageous in that it has a fast response time and good color reproducibility, but disadvantageous in that it is more expensive and thick.

That is, the related art light emitting devices each has its respective problems. In addition, when the LCD is driven, the related art light emitting devices are constantly turned on with a certain brightness, so they cannot suitably keep up with improvements in picture quality of the LCD. In order to improve the picture quality, the contrast should be improved and a residual image (or afterimage) should be removed in implementing video. In this respect, however, because the light emitting device constantly supplies light of a certain luminance, it is difficult to improve the contrast and remove a residual image of video by using only liquid crystal elements. Moreover, because the light emitting device is constantly turned on, it is difficult to improve power efficiency of the light emitting device in displaying darker images or brighter images.

The above information disclosed in the Background section is only for enhancement of understanding of the background of the invention, and therefore may contain information that does not form the prior art that is already known in this country to a person of ordinary skill in the art.

### SUMMARY OF THE INVENTION

Exemplary embodiments of the present invention provide a light emitting device, its driving method, and a display device having the same, having features of improving the contrast, removing residual images, and enhancing power efficiency.

An exemplary embodiment of the present invention provides a light emitting device including: a controller for generating a light emission signal according to an input video signal; a column driver for generating a light emission data signal corresponding to the light emission signal; and a plurality of scan lines for transmitting a plurality of scan signals, a plurality of column lines for transmitting a plurality of light emission data signals, and a plurality of light emission pixels at crossing regions of the plurality of scan lines and the plurality of column lines, wherein the controller is configured to sum gray levels corresponding to the input video signal of a single frame, to calculate a load ratio corresponding to the sum, to calculate a conversion ratio corresponding to the load ratio, and to increase the light emission data signal according to the conversion ratio. The controller may include a look-up table storing the relationship between the load ratio and the conversion ratio, and the conversion ratio may be reduced as the load ratio is increased. The column driver may be configured to generate a light emission data signal having a duty ratio according to the light emission signal, or be configured to generate a light emission data signal having a voltage strength according to the light emission signal. Alternatively, the column driver may be configured to generate the light emission data signal by determining a voltage strength and a duty ratio according to the light emission signal.

Another embodiment of the present invention provides a light emitting device including: a controller for generating a light emission signal according to an input video signal; a column driver for generating a light emission data signal corresponding to the light emission signal; and a plurality of scan lines for transmitting a plurality of scan signals, a plurality of column lines for transmitting a plurality of light emission data signals, and a plurality of light emission pixels at crossing regions of the plurality of scan lines and the plurality of column lines, wherein the controller is configured to sum gray levels corresponding to the input video signal of a single frame, to calculate a load ratio corresponding to the sum, to calculate a conversion ratio corresponding to the load ratio, to transfer the calculated conversion ratio to the column driver, and wherein the column driver is configured to increase the light emission data signal corresponding to the light emission signal according to the conversion ratio. The conversion ratio may be reduced as the load ratio is increased.

Yet another embodiment of the present invention provides a display device including: a panel assembly including a plurality of gate lines for transmitting a plurality of gate signals, a plurality of data lines for transmitting a plurality of data signals, and a plurality of pixels defined by the plurality of gate lines and the plurality of data lines; a signal controller for generating a plurality of data signals according to an input video signal; and a light emitting device corresponding to at least one of the plurality of pixels and includes a plurality of light emission pixels, wherein the light emitting device includes a controller for generating a light emission signal according to an input video signal, a column driver for generating a light emission data signal corresponding to the light emission signal, and a plurality of scan lines for transmitting a plurality of scan signals, a plurality of column lines for transmitting a plurality of light emission data signals, and a plurality of light emission pixels at crossing regions of the plurality of scan lines and the plurality of column lines, wherein the controller is configured to sum gray levels corresponding to the input video signal of a single frame, to calculate a load ratio corresponding to the sum, to calculate a conversion ratio corresponding to the load ratio, and to increase the light emission data signal according to the conversion ratio. The conversion ratio may be reduced as the load ratio is increased.

Still another embodiment of the present invention provides a method for driving a light emitting device including a plurality of light emission pixels that emit light according to light emission data signals, including: calculating a load ratio corresponding to an input video signal; calculating a conversion ratio corresponding to the load ratio; and amplifying the input video signal according to the conversion ratio to generate a light emission data signal. The conversion ratio may be reduced as the load ratio is increased.

Exemplary embodiments of the present invention therefore provide a light emitting device capable of improving contrast, removing residual images, and enhancing power efficiency, and a display device having the same.

### BRIEF DESCRIPTION OF THE DRAWINGS

FIG. 1 is an exploded perspective view of a liquid crystal display (LCD) according to a first exemplary embodiment of the present invention.
FIG. 2 is a partial cut-away perspective view of a liquid crystal panel assembly in FIG. 1.
FIG. 3 is a partial cut-away perspective view of a light emitting unit according to a first exemplary embodiment of the present invention.
FIG. 4 is a partial cross-sectional view of a fourth substrate and an electron emitting unit in FIG. 3.
FIG. 5 is a partial top view of an electron emitting unit of a light emitting unit according to a second exemplary embodiment of the present invention.
FIG. 6 is a partial cut-away perspective view of a light emitting device according to an alternative embodiment of the present invention.
FIG. 7 is a schematic block diagram of an LCD according to a third exemplary embodiment of the present invention.
FIG. 8 is an equivalent circuit diagram of a pixel of an LCD according to the third exemplary embodiment of the present invention.
FIG. 9 is a schematic block diagram of the light emitting device according to the third exemplary embodiment of the present invention.
FIGs. 10A to 10C show methods of generating a light emission data signal according to a light emission signal according to the third exemplary embodiment of the present invention.

### DETAILED DESCRIPTION OF THE EMBODIMENTS

Throughout this specification and the claims that follow, when it is described that an element is "coupled" to another element, the element may be "directly coupled" to the other element or "electrically coupled" to the other element through one or more additional elements. In addition, unless explicitly described to the contrary, the word "comprise", and variations such as "comprises" or "comprising", will be understood to imply the inclusion of stated elements but not the exclusion of any other elements.

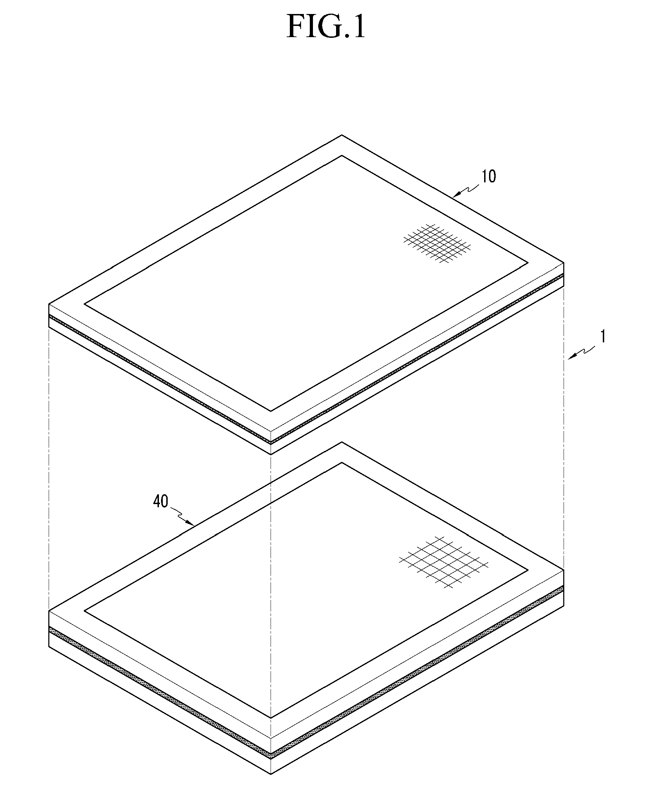

FIG. 1 is an exploded perspective view of a liquid crystal display (LCD) according to a first exemplary embodiment of the present invention.

With reference to FIG. 1, a liquid crystal display (LCD) 1 includes a liquid crystal panel assembly 10 having pixels in a row direction and in a column direction, and a light emitting device 40 having a smaller number of pixels than the pixels of the liquid crystal panel assembly 10 in both the row direction and in the column direction, positioned at a rear side of the liquid crystal panel assembly 10 and providing light to the liquid crystal panel assembly 10.

Here, the row direction may be defined as one direction of the LCD 1, e.g., as a horizontal direction (e.g., an x-axis direction in the drawing) of a screen implemented by the liquid crystal panel assembly 10, and the column direction may be defined as another direction of the LCD 1, e.g., as a vertical direction (e.g., a y-axis direction in the drawing) of the screen implemented by the liquid crystal panel assembly 10.

If the number of pixels of the liquid crystal panel assembly 10 and the number of pixels of the light emitting device 40 in the row direction are M and M', respectively, and the number of pixels of the liquid crystal panel assembly 10 and the number of pixels of the light emitting device 40 in the column direction are N and N', respectively, then, the resolution of the liquid crystal panel 10 may be expressed by MxN and that of the light emitting device 40 may be expressed by M'xN'.

In this exemplary embodiment, M and N indicating the number of pixels of the liquid crystal panel assembly 10 may be defined by an integer of 240 or larger, and M' and N' indicating the number of pixels of the light emitting device 40 may be defined by an integer between 2 and 99. The light emitting device 40 includes a self-emission panel having a resolution of MxN.

Thus, one pixel of the light emitting device 40 is positioned such that it corresponds to two or more pixels of the liquid crystal panel assembly 10. ON/OFF operations and light emission strengths of the pixels of the light emitting device 40 are individually controlled by driving electrodes arranged in a matrix form, e.g., scan electrodes and data electrodes positioned in mutually perpendicular directions.

In the present exemplary embodiment, one pixel of the light emitting device 40 includes a field emission array (FEA) type electron emission element.

The FEA type electron emission element includes a scan electrode, a data electrode, an electron emission region electrically connected with one of the scan electrode and the data electrode, a light emission layer, and additional components in some embodiments. The electron emission region may be made of a material having a low work function and/or a material having a high aspect ratio, e.g., a carbon-based material and/or a nanometer-sized material.

The FEA type electron emission element forms an electric field around the electron emission region by using a voltage difference between the scan electrode and the data electrode to emit electrons, thereby exciting a phosphor layer, to emit visible light of a strength corresponding to an emission amount of electron beams.

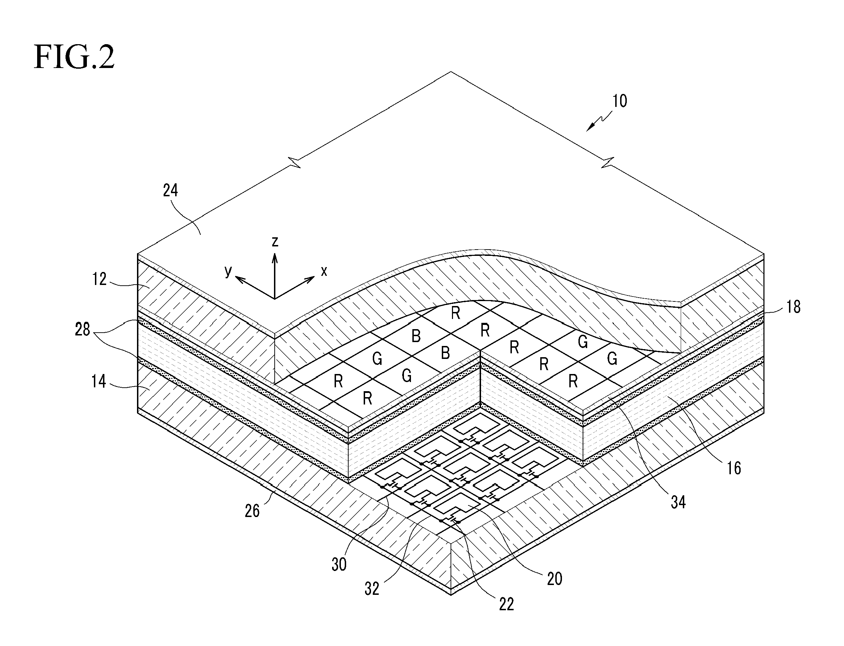

FIG. 2 is a partially cut-away perspective view of a liquid crystal panel assembly in FIG. 1.

As shown in FIG. 2, the liquid crystal panel assembly 10 includes first and second transparent substrates 12 and 14 which face each other, a liquid crystal layer 16 injected between the first and second substrates 12 and 14, a common electrode 18 positioned on an inner surface of the first substrate 12, and pixel electrodes 20 and switching elements 22 positioned on an inner surface of the second substrate 14. A sealing member (not shown) may be positioned on edges of the first and second substrates 12 and 14.

The first substrate 12 is a front substrate of the liquid crystal panel assembly 10, and the second substrate 14 is a rear substrate of the liquid crystal panel assembly 10. A pair of polarizers 24 and 26 are positioned on outer surfaces of the first and second substrates 12 and 14, respectively, and polarization axes of the polarizers 24 and 26 are configured to be perpendicular to each other. An inner surface of the first substrate 12, on which the common electrode 18 is positioned, and an inner surface of the second substrate 14, on which pixel electrodes 20 and switching elements 22 are positioned, are covered with alignment layers 28.

A plurality of gate lines 30 for transferring gate signals (also called scan signals) and a plurality of data lines 32 for transferring data signals are formed on the inner surface of the second substrate 14. The gate lines 30 are positioned parallel to each other along the row direction, and the data lines 32 are positioned parallel to each other along the column direction.

A pixel electrode 20 is positioned at every subpixel, and each subpixel includes a switching element 22 connected with a gate line 30 and a data line 32, and may also include a liquid crystal capacitor Clc (not shown) and a storage capacitor Cst (not shown).

The switching element 22 may be a thin film transistor (TFT) that has a control terminal and an input terminal that are connected with the gate line 30and the data line 32, respectively, and an output terminal connected with the liquid crystal capacitor Clc.

Color filters 34 are disposed between the first substrate 12 and the common electrode 18. The color filters 34 may include red, green, and blue filters each corresponding to one sub-pixel, and three sub-pixels where the red, green, and blue filters are positioned may constitute a single pixel.

In the liquid crystal panel assembly 10 having the above-described configuration, when the switching element 22 is turned on, an electric field is formed between the pixel electrodes 20 and the common electrode 18. The electric field makes helix angles of liquid crystal molecules positioned in the liquid crystal layer 16 change to control light transmittance of each subpixel to thus display a certain color image.

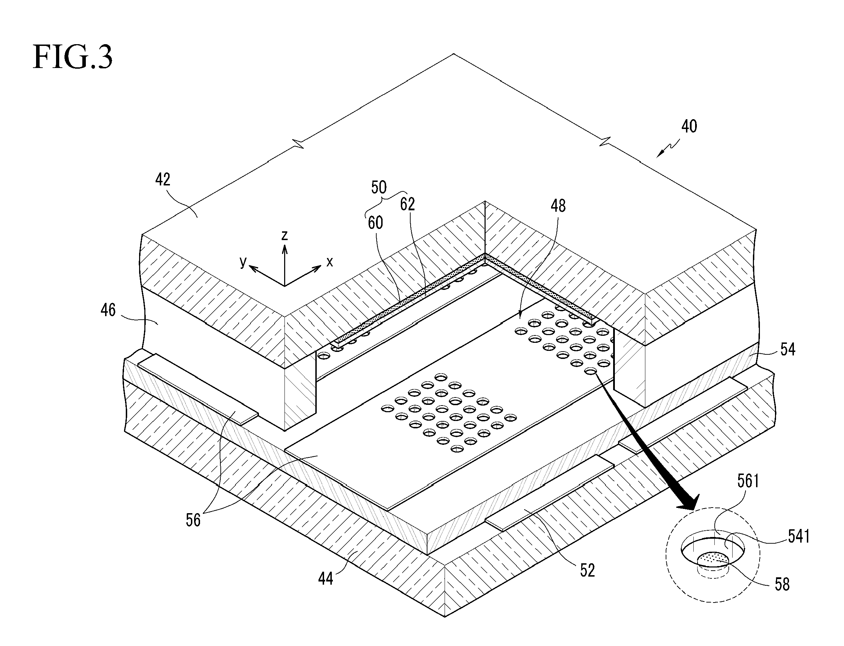

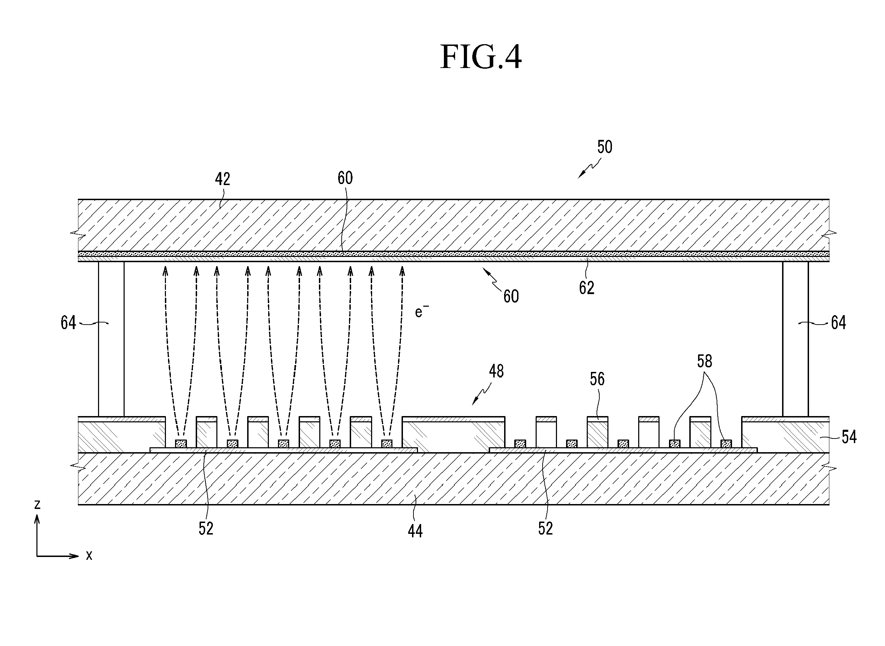

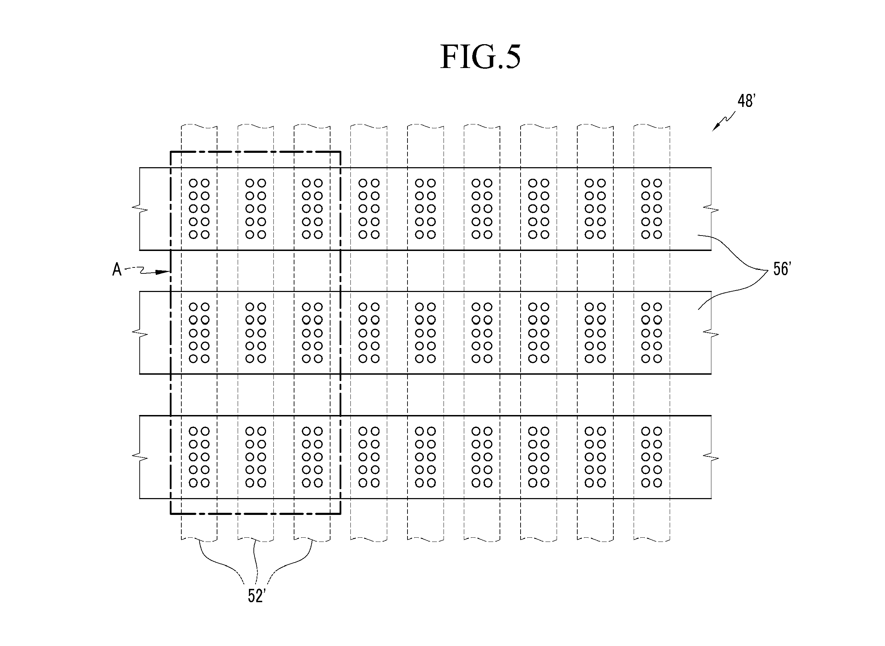

A first example of the light emitting device will be described with reference to FIGs. 3 and 4, and a second example of the light emitting device will be described with reference to FIG. 5. The examples of the light emitting device include the FEA type electron emission display panel including FEA type electron emission elements.

FIG. 3 is a partial cut-away perspective view of a light emitting unit according to a first exemplary embodiment of the present invention, and FIG. 4 is a partial cross-sectional view of a fourth substrate and an electron emitting unit in FIG. 3.

With reference to FIGs. 3 and 4, the light emitting device 40 includes third and fourth substrates 42 and 44 facing each other with a gap therebetween. A sealing member 46 is disposed on edges of the third and fourth substrates 42 and 44 to attach the two substrates. An inter space between the third and fourth substrates 42 and 44 is vacuumized with a vacuum degree of substantially 10⁻⁶ Torr, so the third substrate 42, the fourth substrate 44, and the sealing member 46 form a vacuum container.

The third substrate 42 is a front substrate of the light emitting device 40 facing toward the liquid crystal panel assembly and the fourth substrate 44 is a rear substrate of the light emitting device 40. An electron emitting unit 48 for emitting electrons is provided on a surface of the fourth substrate 44 facing the third substrate 42, and a light emitting unit 50 is provided on a surface of the third substrate 42 facing the fourth substrate 44.

First, referring to the electron emitting unit 48, the electron emitting unit 48 includes cathode electrodes 52 formed in a stripe pattern along one direction of the fourth substrate 44, gate electrodes 56 formed in a stripe pattern along a direction perpendicular to the cathode electrodes 52 with an insulation layer 54 interposed therebetween, and electron emission regions 58 electrically connected with the cathode electrodes 52.

The gate electrodes 56 may be positioned side by side along a row direction of the fourth substrate 44, and may serve as scan electrodes for receiving scan driving voltages. The cathode electrodes 52 may be positioned side by side along a column direction of the fourth substrate 44, and may serve as data electrodes for receiving data driving voltages.

Electron emission regions 58 are formed at respective crossings of the cathode electrodes 52 and the gate electrodes 56. Openings 541 and 561 corresponding to respective electron emission regions 58 are respectively formed in the insulation layer 54 and the gate electrodes 56, exposing the electron emission regions 58. In the present exemplary embodiment, the crossing regions of the cathode electrodes 52 and the gate electrodes 56 correspond to a single pixel region of the light emitting device 40.

The electron emission regions 58 are made of a material, e.g., a carbon-based material and/or a nanometer-sized material, which emits electrons when an electric field is applied in a vacuum state. The electron emission regions 58 may be made of a material such as carbon, carbon nanotube, graphite, graphite nanofiber, diamond, diamond-like carbon, C60, silicon nanowire, or combinations thereof, and fabrication methods may include screen printing, direct growing, chemical vapor deposition (CVD), sputtering, or similar alternatives.

The electron emission regions 58 may also have a structure with a tip front end made of molybdenum (Mo) or silicon (Si) as a primary material.

The light emission unit 50 provided on the third substrate 42 includes a phosphor layer 60 and an anode electrode 62 positioned on one surface of the phosphor layer 60. The phosphor layer 60 may be formed of a white phosphor layer or may have a structure formed by combining red, green, and blue phosphor layers. The figure shows the first case.

The white phosphor layer may be formed on the entire third substrate 42, or selectively positioned such that one white phosphor layer is positioned at every pixel region. The red, green, and blue phosphor layers may alternatively be selectively positioned in certain patterns in a single pixel region.

The anode electrode 62 may be made of a metallic film such as aluminum (AI) covering the surface of the phosphor layer 60. The anode electrode 62, an accelerating electrode that attracts electron beams, receives a high voltage (substantially a positive DC voltage of thousands of volts) to maintain the phosphor layer 60 in a high potential state, and serves to increase the luminance of the screen by reflecting visible light emitted toward the fourth substrate 44, among visible light that has been emitted from the phosphor layer 60, back toward the third substrate 42.

In the above-described configuration, a pixel of the FEA type electron emission element includes a cathode electrode 52, a gate electrode 56, a plurality of electron emission regions 58, and a corresponding portion of the phosphor layer 60.

In the above-described configuration, when a certain driving voltage is applied to the cathode electrodes 52 and the gate electrodes 56, an electric field is formed around the electron emission regions 58 at a pixel region in which a voltage difference between the two electrodes is higher than a threshold value, emitting electrons therefrom. The emitted electrons are attracted by the high voltage applied to the anode electrode 62, and collide with and emit the corresponding phosphor layer 60. The strength of light emission of the phosphor layer 60 corresponds to the amount of emission of electron beams of the corresponding pixels.

FIG. 5 is a partial top plan view of an electron emitting unit 48'of the light emitting device according to a second exemplary embodiment of the present invention.

With reference to FIG. 5, in the present exemplary embodiment, a single pixel area A includes two or more combinations of cathode electrodes 52' and gate electrodes 56'. In the case where two or more cathode electrodes 52' and two or more gate electrodes 56' are combined to form a single pixel area A, the two or more cathode electrodes 52' are electrically connected to each other to receive the same driving voltage and the two or more gate electrodes 56' are also electrically connected to each other to receive the same driving voltage.

For this, the two or more cathode electrodes 52' and the two or more gate electrodes 56' may extend to the edges of the fourth substrates to allow end portions mounted on a connection member (not shown), such as a flexible printed circuit board (FPCB), or the like, to be connected to each other.

FIG. 5 shows the case, for example, where nine crossings of three cathode electrodes 52' and three gate electrodes 56' form the single pixel area A.

Both in the first and second examples of the light emitting devices, spacers 64 (See FIG. 4) are disposed between the third and fourth substrates 42 and 44 to support a compression force applied to the vacuum container and uniformly maintain the gap between the two substrates. The spacers 64 may be positioned at an outer portion of the pixel area, not at a central portion of the pixel area.

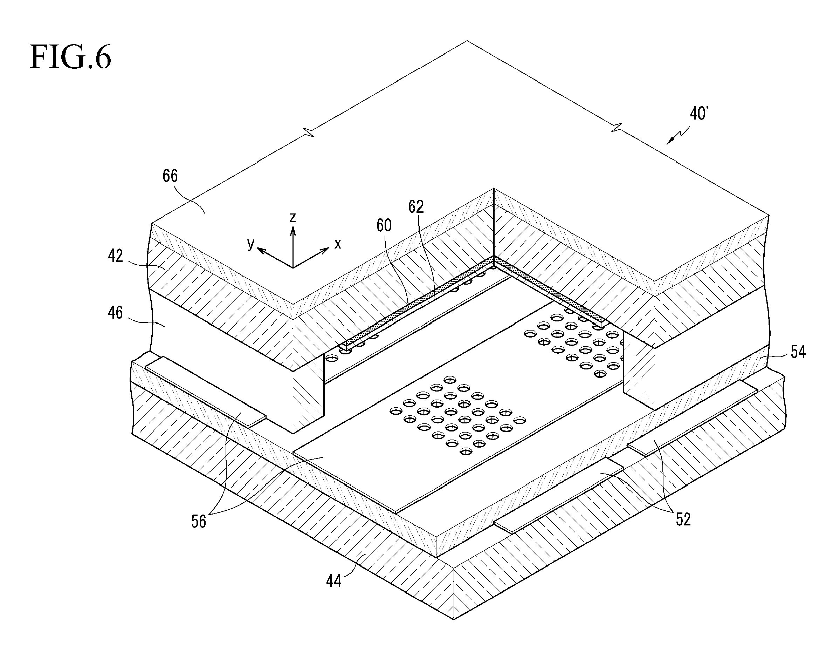

The third substrate 42 may include a light diffusion function, as necessary, and according to an alternative embodiment of the present invention, as shown in FIG. 6, a diffuser 66 having a light diffusion function may be positioned on an outer surface of the third substrate 42 facing the liquid crystal panel assembly.

The LCD 1 according to the present exemplary embodiment uses the light emitting device 40, a relatively low-resolution light emitting device having a smaller number of pixels than the number of the pixels of the liquid crystal panel assembly 10 as a backlight providing a light source. The light emitting device 40 is driven by a passive matrix method using scan electrodes and data electrodes, and light of different intensities is provided to corresponding pixels of the liquid crystal panel assembly 10. Thus, the LCD 1 according to the present exemplary embodiment has advantages when compared to the related art CCFL type light emitting device or the LED type light emitting device.

That is, the light emitting device 40 according to the present exemplary embodiment is a surface light source, and therefore does not need a plurality of optical members, as seen in CCFL type light emitting devices and LED type light emitting devices. Thus, in the present exemplary embodiment, the light emitting device 40 does not cause light loss when light passes through the optical members. In addition, because the light emitting device 40 does not need to emit light with excessively high intensity to compensate for such light loss, the light emitting device 40 improves efficiency with lower power consumption.

In addition, because the light emitting device 40 generally consumes a smaller amount of power when compared with the CCFL type light emitting device, and does not use an optical member, the light emitting device 40 may save the corresponding costs and incur lower fabrication costs compared with LED type light emitting devices. Also, the light emitting device 40 can be more readily applied in larger sizes, so it can be more easily employed for larger-size LCDs of 30 inches or larger.

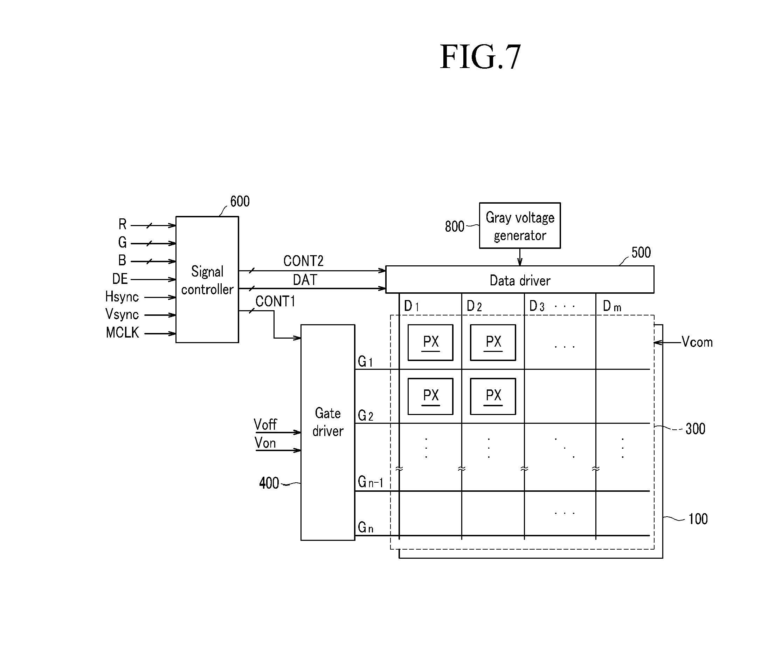

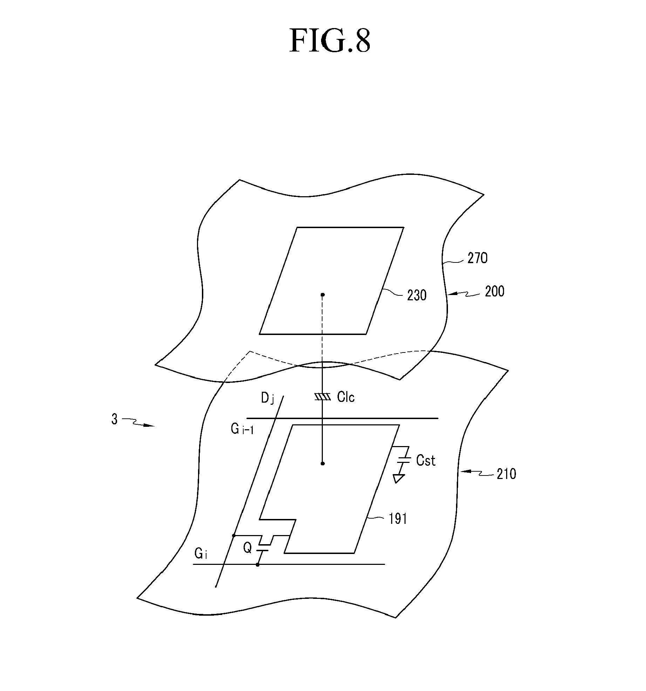

FIG. 7 is a schematic block diagram of a display device according to the third exemplary embodiment of the present invention. The display device according to the third exemplary embodiment of the present invention is an LCD that employs a liquid crystal element as a light receiving element. However, the present invention is not limited thereto. FIG. 8 is an equivalent circuit diagram of a pixel of the LCD according to the third exemplary embodiment of the present invention. The LCD according to the third exemplary embodiment of the present invention includes the above-described light emitting device as a backlight. Reference numeral 100 denotes the light emitting device in the third exemplary embodiment of the present invention.

With reference to FIG. 7, the LCD according to an exemplary embodiment of the present invention includes: a light emitting device 100, a liquid crystal panel assembly 300, a gate driver 400, a data driver 500, a gray voltage generator 800, and a signal controller 600.

With reference to FIG. 7, in view of the block diagram, the liquid crystal panel assembly 300 includes a plurality of signal lines G₁-Gₙ and D₁-Dₘ and a plurality of pixels connected with the signal lines G₁-Gₙ and D₁-Dₘ and arranged substantially in a matrix form. The signal lines include a plurality of gate lines G₁-Gₙ that transfer gate signals (also called scan signals) and a plurality of data lines D₁-Dₘ that transfer data voltages. The gate lines G₁-Gₙ extend in a row direction and are substantially parallel to each other, and the data lines D₁-Dₘ extend in a column direction and are substantially parallel to each other.

Each pixel PX, for example, a pixel PXij connected with the ith (i=1, 2, .., n) gate line Gᵢ and the jth (j=1, 2, ..., m) data line (Dⱼ), includes a switching element connected with the signal lines Gi and Dj, and a liquid crystal capacitor Clc and a storage capacitor Cst that are connected with the switching element. The storage capacitor Cst may be omitted in some embodiments.

Referring now to FIG. 8, a switching element Q is a three-terminal element such as a thin film transistor (TFT) provided on a lower panel 210, which includes a control terminal connected with the gate line Gᵢ, an input terminal connected with the data line Dⱼ, and an output terminal connected with the liquid crystal capacitor Clc and the storage capacitor Cst.

The liquid crystal capacitor Clc uses a pixel electrode 191 of the lower panel 210 and a common electrode 270 of an upper panel 200 as two terminals, and the liquid crystal layer 3 between the two electrodes 191 and 270 serves as a dielectric material. The pixel electrode 191 is connected with the switching element Q, and the common electrode 270 is formed on the entire surface of the upper panel 200 and receives a common voltage (Vcom). Different from the embodiment with respect to FIG. 2, the common electrode 270 may be provided on the lower panel 210, and in this case, at least one of the two electrodes 191 and 270 may be formed in a linear or bar shape.

The storage capacitor Cst that serves as an auxiliary to the liquid crystal capacitor Clc is formed as a separate signal line provided on the lower panel 210, overlapping the pixel electrode 191, with an insulator interposed therebetween, and a voltage, for example, a predetermined voltage such as the common voltage Vcom, is applied to the separate signal line. Also, the storage capacitor Cst may be formed as the pixel electrode 191 overlaps with the immediately previous gate line Gᵢ-1 by the medium of the insulator.

In order to implement color display, each pixel PX uniquely displays one of primary colors (spatial division) or the respective pixels PX alternately display the primary colors over time (temporal division), so that a desired color can be recognized by the spatial or temporal sum of the primary colors. The primary colors may be, for example, the three primary colors of light, red, green, and blue. FIG. 8 shows one example of the spatial division in which each pixel PX includes a color filter 230 that displays one of the primary colors at a region of the upper panel 200 corresponding to the pixel electrode 191. Different from the color filter 230 as shown in FIG. 8, the color filter may be formed above or below the pixel electrode 191 of the lower panel 210.

With reference back to FIG. 7, at least one polarizer (not shown) is provided on the liquid crystal panel assembly 300.

In FIG. 7, the gray voltage generator 800 may generate all the gray voltages or a limited number of gray voltages (referred to as 'reference gray voltages', hereinafter) related to the transmittance of the pixels PX. The (reference) gray voltages may include a reference gray voltage of a positive value or a reference gray voltage of a negative value with respect to the common voltage Vcom.

The gate driver 400 is connected with the gate lines G₁-Gₙ of the liquid crystal panel assembly 300 and applies a gate signal of either a gate-on voltage Von or a gate-off voltage Voff to each of the gate lines G₁-Gₙ.

The data driver 500 is connected with the data lines D₁-Dₘ of the liquid crystal panel assembly 300, and selects a gray voltage from the gray voltage generator 800 and applies it as a data voltage to the data lines D₁-Dₘ. If the gray voltage generator 800 does not provide all the gray voltages, but provides only a limited number of reference gray voltages, the data driver 500 divides and/or distributes the reference gray voltages to generate desired data voltages.

The signal controller 600 controls the gate driver 400, the data driver 500, and additional components/drivers in some embodiments.

The operation of the LCD will now be described in more detail.

The signal controller 600 receives input video signals R, G, and B and input control signals for controlling display of the input video signals from an external graphics controller (not shown). The input video signals R, G, and B include luminance information of each pixel PX, the luminance based on gray level ranges of 1024 (=2¹⁰), 256 (=2⁸), or 64(=2⁶). The input control signals include, for example, a vertical synchronization signal Vsync, a horizontal synchronization signal Hsync, a main clock signal MCLK, a data enable signal DE, and additional signals in some embodiments.

The signal controller 600 appropriately processes the input video signals R, G, and B according to operational conditions of the liquid crystal panel assembly 300 based on the input control signals to generate a digital video signal DAT, a gate control signal CONT1, and a data control signal CONT2, and transmits the gate control signal CONT1 to the gate driver 400 and the processed digital video signal DAT to the data driver 500.

The gate control signal CONT1 includes a scanning start signal STV for instructing start of scanning, and at least one clock signal for controlling an output period of the gate-on voltage Von. The scan control signal CONT1 may additionally include an output enable signal OE for limiting duration of the gate-on voltage Von.

The data control signal CONT2 includes a horizontal synchronization start signal STH for instructing to the data driver 500 a start of transmission of the digital video signal DAT for one row of pixels PX to the data driver 500, and a load signal LOAD for indicating application of an analog data voltage to the data lines D₁-Dₘ. The data control signal CONT2 may further include an inversion signal for inverting the polarity of the data voltage with respect to the common voltage Vcom ('the polarity of the data voltage with respect to the common voltage' is also known as 'the polarity of the data voltage').

The data driver 500 selects a gray voltage corresponding to the digital video signal DAT to generate an analog data voltage and apply the same to corresponding data lines D₁-Dₘ.

The gate driver 400 applies the gate-on voltage to the gate lines G₁-Gₙ according to the gate control signal CONT1 from the signal controller 600 to turn on the switching elements Q connected with the gate lines G₁-Gₙ. Then, the data voltage, which has been applied to the data lines D₁-Dₘ, is applied to the corresponding pixels PX through the turned-on switching elements Q.

A difference between the data voltage applied to the pixels PX and the common voltage Vcom appears as a charge voltage, namely, a pixel voltage, of the liquid crystal capacitor Clc. Arrangement of liquid crystal molecules varies according to the size of the pixel voltage, and polarization of light that transmits through the liquid crystal layer 3 changes accordingly. Such change in the polarization appears as a change in transmittance of light by the polarizer attached on the liquid crystal panel assembly 300, whereby the pixels PX display luminance expressed by the gray level of the video signal DAT.

This process is repeatedly performed by the unit of one horizontal period (namely, '1H' which is equivalent to one period of the horizontal synchronization signal Hsync and the data enable signal DE), in order to sequentially apply the gate-on voltage Von to all the gate lines G₁-Gₙ and the data voltage to all the pixels PX, to thereby display an image of one frame.

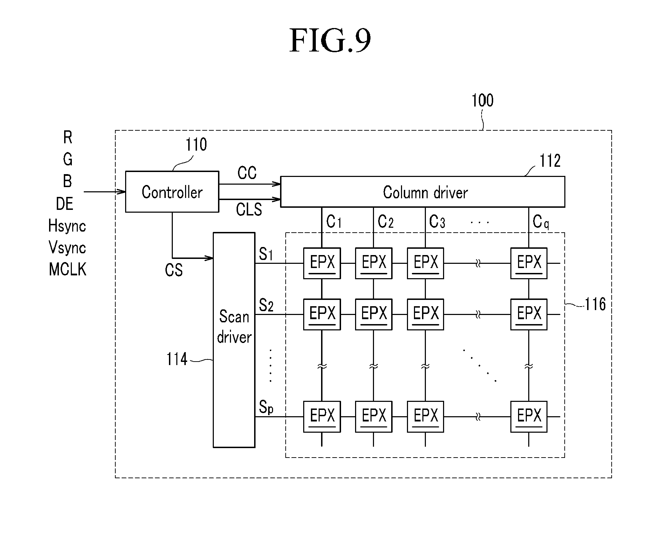

FIG. 9 is a schematic block diagram of the light emitting device 100, as illustrated in FIG. 7, according to the third exemplary embodiment of the present invention. The light emitting device 100 includes a controller 110, a column driver 112, a scan driver 114, and a display unit 116. As shown, in the present exemplary embodiment, scan lines S₁-Sₚ serve as gate electrodes (56 in FIG. 6) of light emission pixels EPX, and column lines C₁-C_{q} serve as cathode electrodes (52 in FIG. 6) of the light emission pixels EPX and are connected with electron emission regions (58 in FIG. 3).

The scan driver 114 is connected with the plurality of scan lines S₁-Sₚ and transfers a plurality of scan signals to allow the light emission pixels EPX to emit light in synchronization with a plurality of liquid crystal pixels PX corresponding to the light emission pixels EPX, according to a scan driving control signal CS. The scan signals include a scan-on voltage VN having a voltage level which allows the electron emission regions 58 to emit electrons, and a scan-off voltage VF having a voltage level which does not allow the electron emission regions 58 to emit electrons.

The column driver 112 is connected with the plurality of column lines C₁-C_{q} and controls the light emission pixels EPX to emit light correspondingly according to gray levels of the plurality of liquid crystal pixels PX according to a light emission control signal CC and a light emission signal CLS. In detail, the column driver 112 generates a plurality of light emission data signals according to the light emission signal CLS, and transfers the same to the plurality of column lines C₁-C_{q} according to the light emission control signal CC. Namely, the column driver 112 synchronizes light emission pixels EPX such that the light emission pixels EPX emit light with a certain gray level according to an image displayed on the plurality of liquid crystal pixels PX. In this case, the gray level may correspond to, for example, the highest gray level among a plurality of corresponding liquid crystal pixels PX, or, for example, an average gray level.

The display unit 116 includes the plurality of scan lines S₁-Sₚ transferring scan signals, a plurality of column lines C₁-C_{q} transferring light emission data signals, and a plurality of light emission pixels EPX. The plurality of light emission pixels EPX are positioned at crossing regions of the scan lines S₁-Sₚ and column lines C₁-C_{q}. The scan lines S₁-Sₚ are connected with the scan driver 114, and the column lines C₁-C_{q} are connected with the column driver 112. The scan driver 114 and the column driver 112 are connected with the controller 110 and operate according to control signals from the controller 110.

The controller 110 receives the input video signals R, G, and B, and the input control signals Hsync, Vsync, DE, and MCLK, and generates the light emission control signal CC, the light emission signal CLS, and the scan driving control signal CS. The controller 110 detects the highest gray level among a plurality of pixels PX corresponding to one light emission pixel EPX of the light emitting device by using the input video signals R, G, and B, and determines a gray level of the light emission pixels EPX corresponding to the detected gray level. In addition, the controller 110 converts it into digital data to generate the light emission signal CLS and transfer the same to the column driver 112. The controller 110 generates the light emission control signal CC and the scan driving control signal CS by using the input control signals Hsync, Vsync, DE, and MCLK.

The scan driving control signal CS includes a scan start signal STV1 indicating a start of scanning, and at least one clock signal controlling an output period of the scan-on voltage VN.

The light emission control signal CC includes a horizontal synchronization start signal STH1 indicating a start of transmission of the light emission signal CLS to the column driver 112 for a row of the pixels EPX, and load signal LOAD indicating application of a light emission data signal according to the light emission signal CS to the column lines C₁-C_{q}.

In addition, the controller 110 controls the light emission signal CLS according to the total gray scales of a single frame of the input video signals R, G, and B, to maximize the contrast and the efficiency of power consumption. In detail, if an image of a single frame has a much darker region, having low luminance and low power consumption, the luminance of a brighter region is further increased to improve the contrast and maximize the efficiency of power consumption. In particular, in the case of an image with a darker portion and a brighter portion that are adjacent to each other, the light emission pixels of the brighter portion can be controlled to be brighter to sharply display the border between the darker portion and the brighter portion.

The controller 110 sums the total gray levels of the input video signals R, G, and B of a single frame, and calculates a corresponding overall load ratio. The load ratio refers to a ratio of a region with the highest gray level to the entire region. That is, the load ratio refers to a ratio of a full white image region in the entire display area. As the total gray levels are increased, the load ratio is increased, and as the load ratio is increased, power consumption is generally increased. The controller 110 includes a look-up table storing a conversion ratio for increasing each light emission pixel according to a load ratio. The controller 110 changes the light emission signal CLS according to the calculated conversion ratio and transfers the same to the column driver 112. Alternatively, information about the calculated ratio may be transferred to the column driver 112, and the column driver 112 may amplify the light emission data signal according to the calculated ratio and transfer the amplified signal to the respective column lines. The relationship between the ratio stored in the look-up table and the load ratio may be set such that the efficiency of the overall power consumption is maximized according to experimental data. As the load ratio is increased, the conversion ratio is reduced, and as the load ratio is reduced, the conversion ratio is increased. If the load ratio is low, the ratio of power consumption used for the light emission pixels to emit light to input power for the display device is low. Typically, the ratio of the power consumption used for the light emission pixel to emit light is low up to a certain load ratio, substantially reducing power efficiency. In exemplary embodiments of the present invention, the power efficiency is improved by increasing a maximum luminance that can be displayed by the light emission pixels. However, as the load ratio is increased, the ratio of power consumed for the light emission pixels to emit light is increased, so the maximum luminance that can be displayed by the light emission pixels is controlled to be gradually reduced. In this manner, in the present invention, the maximum luminance that can be displayed by the light emission pixels can be changed to maximize the power efficiency according to the load ratio. Thus, the contrast can be increased while the power efficiency is also increased.

The column driver 112 may generate the light emission data signal according to the light emission signal CLS according to any of the three methods as follows.
(1) A method of generating the light emission data signal by controlling a light emission period according to the light emission signal CLS.
(2) A method of generating the light emission data signal by controlling the intensity of light emission according to the light emission signal CLS.
(3) A method of generating the light emission data signal by combining methods (1) and (2).

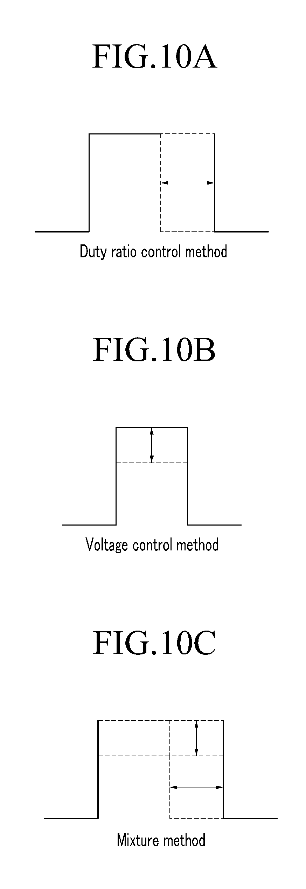

FIGs. 10A to 10C show a method of generating the light emission data signal according to the light emission signal by the light emitting device according to the third exemplary embodiment of the present invention.

As shown in FIG. 10A, in method (1), the column driver 112 adjusts a duty ratio of the light emission data signal according to the light emission signal CLS. In this case, if the light emission signal CLS is amplified, the duty ratio of the light emission data signal is increased. Then, the light emission period of the light emission pixels is increased according to the difference between the voltage applied to the gate electrodes and the voltage of the cathode electrodes, so the luminance can be increased. In addition, the column driver may increase the duty ratio corresponding to the light emission signal CLS according to the received conversion ratio to increase the luminance of the light emission pixels.

As shown in FIG. 10B, in the method (2), the column driver 112 adjusts the voltage strength of the light emission data signal according to the light emission signal CLS. In this case, if the light emission signal CLS is amplified, the voltage of the light emission data signal is increased. Then, the difference between the voltage of the cathode electrodes and that of the gate electrodes of the light emission pixels is increased, increasing the luminance. In addition, the column driver may directly increase the voltage of the light emission data signal corresponding to the light emission signal according to the received conversion ratio, to increase the luminance of the light emission pixels.

As shown in FIG. 10C, in the method (3), the column driver 112 adjusts the duty ratio of the light emission data signal and the voltage strength of the light emission data signal according to the light emission signal CLS. In this case, if the light emission signal CLS is amplified, the duty ratio of the light emission data signal is increased or the voltage strength is increased. In addition, the duty ratio and the voltage strength can be concurrently increased. Then, the difference between the voltage of the gate electrodes and the voltage of the cathode electrodes of the light emission pixels is increased to increase the luminance, or the period of the light emission can be increased according to the difference between the voltage applied to the data electrodes and the voltage applied to the cathode electrodes of the light emission pixels. In addition, the column driver may directly increase the voltage of the light emission data signal corresponding to the light emission signal according to the received conversion ratio or increase the duty ratio corresponding to the light emission signal to increase the luminance of the light emission pixels.

As described above, in the light emitting device of the display device according to exemplary embodiments of the present invention, the luminance of the darker regions and brighter regions may be adjusted by adjusting the gray levels according to the total power consumption, to thereby improve the contrast and the power efficiency.

In the above-described embodiment, the display device uses the liquid crystal panel assembly, but the present invention is not limited thereto. Namely, exemplary embodiments of the present invention can be applied to any display device, so long as it, as a non-self emission display device, displays an image upon receiving light from a light emitting device.

## Claims

1. A light emitting device (100) comprising:
a controller (110) for generating a light emission signal according to an input video signal;
a column driver (112) for generating a light emission data signal corresponding to the light emission signal; and
a plurality of scan lines for transmitting a plurality of scan signals, a plurality of column lines for transmitting a plurality of light emission data signals, and a plurality of light emission pixels at crossing regions of the plurality of scan lines and the plurality of column lines,
wherein the controller (110) is configured to sum gray levels corresponding to the input video signal of a single frame, to calculate a load ratio corresponding to the sum, to calculate a conversion ratio corresponding to the load ratio, and to increase the light emission data signal according to the conversion ratio.

2. The device of claim 1, wherein the controller (110) comprises a look-up table storing the relationship between the load ratio and the conversion ratio, and wherein the conversion ratio is reduced as the load ratio is increased.

3. The device of claims 1 to 2, wherein the column driver (112) is configured to generate the light emission data signal having a duty ratio according to the light emission signal.

4. The device of claims 1 to 3, wherein the column driver (112) is configured to generate the light emission data signal having a voltage strength according to the light emission signal.

5. The device of claim 2, wherein the column driver (112) is configured to generate the light emission data signal by determining a voltage strength and a duty ratio according to the light emission signal.

6. A light emitting device (100) of claims 1 to 5,
wherein the controller (110) is configured to transfer the calculated conversion ratio to the column driver (112), and wherein the column driver (112) is configured to increase the light emission data signal corresponding to the light emission signal according to the conversion ratio.

7. The device of claim 6, wherein the conversion ratio is reduced as the load ratio is increased.

8. A display device comprising:
a panel assembly (300) comprising a plurality of gate lines for transmitting a plurality of gate signals, a plurality of data lines for transmitting a plurality of data signals, and a plurality of pixels defined by the plurality of gate lines and the plurality of data lines;
a signal controller (600) for generating a plurality of data signals according to an input video signal; and
a light emitting device (100) corresponding to at least one of the plurality of pixels and comprises a plurality of light emission pixels, the light emitting device comprising:
a controller (110) for generating a light emission signal according to an input video signal;
a column driver (112) for generating a light emission data signal corresponding to the light emission signal; and
a plurality of scan lines for transmitting a plurality of scan signals, a plurality of column lines for transmitting a plurality of light emission data signals, and a plurality of light emission pixels at crossing regions of the plurality of scan lines and the plurality of column lines,
wherein the controller (110) is configured to sum gray levels corresponding to the input video signal of a single frame, to calculate a load ratio corresponding to the sum, to calculate a conversion ratio corresponding to the load ratio, and to increase the light emission data signal according to the conversion ratio.

9. The device of claim 8, wherein the conversion ratio is reduced as the load ratio is increased.

10. The device of claims 8 to 9, wherein the column driver (112) is configured to generate the light emission data signal having a duty ratio according to the light emission signal.

11. The device of claims 8 to 10, wherein the column driver (112) is configured to generate the light emission data signal having a voltage according to the light emission signal.

12. The device of claims 8 to 11, wherein the column driver (112) is configured to generate the light emission data signal by determining a voltage strength and a duty ratio according to the light emission signal.

13. A method for driving a light emitting device (100) comprising a plurality of light emission pixels which emit light according to light emission data signals, the method comprising:
calculating a load ratio corresponding to an input video signal;
calculating a conversion ratio corresponding to the load ratio; and
amplifying the input video signal according to the conversion ratio to generate a light emission data signal.

14. The method of claim 13, wherein the conversion ratio is reduced as the load ratio is increased.

15. The method of claim 14, further comprising determining a duty ratio of the light emission data signal.

16. The method of claim 14, further comprising determining a voltage strength of the light emission data signal.

17. The method of claim 14, further comprising determining a voltage strength and a duty ratio of the light emission data signal.
